# EUROPÄISCHE PATENTSCHRIFT

(11) **EP 1 593 550 B1**
(45) Veröffentlichungstag und Bekanntmachung des Hinweises auf die Patenterteilung: **04.03.2009**
(21) Anmeldenummer: 05008151.2
(22) Anmeldetag: 14.04.2005
(51) Int. Cl.: B60R 1/08

(54) **Innenspiegel mit Antriebseinrichtung zur Verstellung eines Keilspiegelglases**
Interior mirror with drive device for adjusting the mirror glass
Rétroviseur intérieur avec dispositif d'entraînement pour adjuster le verre du miroir

(30) Priorität: 05.05.2004 DE 102004022523
(43) Veröffentlichungstag der Anmeldung: 09.11.2005
(73) Patentinhaber: Magna Donnelly GmbH & Co. KG, 97904 Dorfprozelten (DE)
(72) Erfinder: Weimer, Helmut, 97896 Kirschfurt (DE); Fuchs, Hans-Joachim, 97904 Dorfprozelten (DE)
(74) Vertreter: von den Steinen, Axel

(56) Entgegenhaltungen:
- EP-A- 0 202 757
- EP-A- 0 228 580
- DE-A1- 3 041 692
- DE-A1- 3 147 281
- DE-A1- 3 207 200
- DE-A1- 4 306 283

## Beschreibung

Die Erfindung betrifft einen Innenspiegel mit einer Antriebseinrichtung zur Verstellung eines Keilspiegelglases nach dem Oberbegriff des Anspruchs 1.

Aus dem Fahrzeugbau sind gattungsgemäße Innenspiegel mit Keilspiegelglas bekannt. Das Keilspiegelglas erlaubt durch die Verstellung zwischen einer Normalstellung und einer Abblendstellung die Abblendung des Innenspiegels. Dies bedeutet, dass der Reflektionsgrad des Keilspiegelglases in der Abblendstellung erheblich geringer ist, so dass der Fahrer bei Nachtfahrten nicht von den Scheinwerfern nachfolgender Fahrzeuge geblendet wird.

Bei den meisten Fahrzeugen erfolgt die Betätigung der Verstelleinrichtung zur Verstellung des Keilspiegelglases zwischen der Normalstellung und der Abblendstellung manuell. Dies bedeutet, dass der Fahrer zur Verstellung des Keilspiegelglases ein am Innenspiegel vorgesehenes Betätigungselement, beispielsweise einen Stellhebel oder einen Drehknopf, manuell betätigen muss.

Aus der DE 32 34 157 A1 und der EP 02 08 008 B1 sind weiterhin gattungsgemäße Innenspiegel für Fahrzeuge bekannt, bei denen die Verstellung des Keilspiegelglases mittels elektromechanischer Antriebsmittel erfolgt. Durch Ansteuerung eines Elektromotors wird ein mechanisches Übersetzungsgetriebe angetrieben, wobei das Übersetzungsgetriebe derart mit dem Keilspiegelglas in Eingriff steht, dass das Keilspiegelglas zwischen der Normalstellung und der Abblendstellung verstellt werden kann.

Die EP 0 228 580 A2 beschreibt einen Innenspiegel mit einem zwischen einer Normalposition und einer Abblendposition verstellbaren Gehäuse, in dem ein Keilspiegelglas angeordnet ist. Der Innenspiegel umfasst ein über eine Kugelgelenkpfanne mit einem Innenspiegelhalter verbundenes Schaltelement, gegen das das Gehäuse mit einer Formfeder gedrückt wird. Das Gehäuse wird mittels einer Antriebseinrichtung gegen die Federkraft der Feder aus einer ersten der vorstehend genannten Positionen in Richtung auf die jeweils andere, zweite Position zu bewegt, überwindet dabei den Totpunkt der Feder und wird nach dem Überwinden des Totpunktes von der Feder in die zweite Position gedrückt und dort fixiert.

Die DE 31 47 281 A1 offenbart einen Rückspiegel mit einer Spiegelebene, die von einem abhängig von der einfallenden Lichtintensität gesteuerten Antrieb verstellt werden kann. Der Antrieb ist als ein Anbausatz ausgeführt, der ein die Verbindung zur Spiegelebene herstellendes Getriebe aufweist.

In der DE 32 07 200 A1 ist ein Rückspiegel mit einer mittels eines Stellmechanismus verstellbaren Spiegelscheibe beschrieben. Der Stellmechanismus umfasst einen Elektromotor, auf dessen Antriebswelle eine Nockenscheibe befestigt ist. Die Nockenscheibe wirkt mit einem mit der Rückseite der Spiegelscheibe verbundenen Plättchen zusammen, dessen Anlage an der Kontur der Nockenscheibe durch die Vorspannung einer Druckfeder gewährleistet ist. Bei einer Ausführungsform ist ein als Motor dienender Drehmagnet mit dem Schalter für den Blinker verbunden, so dass die Verstellung der Spiegelscheibe automatisch mit dem Betätigen des Blinkers erfolgt.

Ausgehend von diesem Stand der Technik ist es Aufgabe der vorliegenden Erfindung, einen neuen Fahrzeuginnenspiegel vorzuschlagen.

Diese Aufgabe wird durch einen Innenspiegel nach der Lehre des Anspruchs 1 gelöst.

Vorteilhafte Ausführungsformen der Erfindung sind Gegenstand der Unteransprüche.

Ein Vorteil des gattungsgemäßen Innenspiegels liegt insbesondere darin, dass ein elastisches Spannelement vorgesehen ist, mit dem die Verstelleinrichtung in der Normalstellung und/oder in der Abblendstellung elastisch verspannt wird. Durch diese elastische Vorspannung der Verstelleinrichtung wird verhindert, dass sich die Fahrzeugvibrationen unzulässig stark auf das Keilspiegelglas übertragen. Soweit im Antriebsstrang der Antriebseinrichtung zum Antrieb der Verstelleinrichtung ein beispielsweise fertigungsbedingtes Lagerspiel vorhanden ist, wird dieses Lagerspiel durch die elastische Verspannung in der Normalstellung bzw. der Abblendstellung eliminiert.

Da bei gattungsgemäßen Spiegeln durch das elastische Spannelement eine Fixierung des Keilspiegelglases in den beiden Funktionsstellungen auch unabhängig von der elektrischen Antriebseinrichtung gewährleistet ist, ist es besonders vorteilhaft, wenn die Antriebseinrichtung auf einem Trägerelement montiert ist, das unter Ankopplung am Antriebsstrang der Verstelleinrichtung als Sonderausstattungselement montierbar ist. Im Ergebnis können damit in einfacher Weise verschiedene Innenspiegelvarianten produziert werden. In der ersten Variante ist das Trägerelement mit der Antriebseinrichtung nicht montiert und zum Antrieb der Verstelleinrichtung wird stattdessen ein geeignetes Betätigungselement, beispielsweise ein Stellhebel oder Drehknopf, montiert. Soweit für eine Fahrzeugvariante ein entsprechendes Sonderausstattungselement bestellt ist, wird das Trägerelement mit der Antriebseinrichtung im Innenspiegel montiert, so dass eine motorische Verstellbarkeit realisiert wird, ohne größere Änderungen im konstruktiven Aufbau des Innenspiegels vornehmen zu müssen.

In welcher Art das Spannelement konstruktiv ausgebildet ist, ist grundsätzlich beliebig, solange eine ausreichende Verspannung der Verstelleinrichtung gewährleistet ist. Besonders einfache und kostengünstige Ausführungsformen ergeben sich, wenn ein Federelement als Spannelement eingesetzt wird. Solche Federelemente, beispielsweise Schrauben-oder Spiralfedern, können die elastische Verspannung innerhalb bestimmter Belastungsgrenzen zeitlich unbegrenzt aufbringen und sind zudem außerordentlich kostengünstig verfügbar.

Nach einer bevorzugten Ausführungsform ist das Federelement in der Art einer Schenkel- oder Spreizfeder ausgebildet. Diese Art von Federn weisen zwei winkelig zueinander gebogene Schenkel auf und werden derart an der Verstelleinrichtung in Eingriff gebracht, dass die Schenkel-oder Spreizfeder die Verstelleinrichtung sowohl in der Normalstellung als auch in der Abblendstellung elastisch verspannt. Auf diese Weise wird also zur Verspannung der Verstelleinrichtung in ihren beiden Funktionsstellungen nur ein Federelement benötigt, wodurch eine weitere Kostenreduktion erreicht wird.

Weiterhin ist es besonders vorteilhaft, wenn die Normalstellung bzw. die Abblendstellung jeweils durch einen ersten Endanschlag bzw. einen zweiten Endanschlag definiert ist und das Spannelement die Verstelleinrichtung jeweils gegen den ersten bzw. zweiten Endanschlag verspannt. Dadurch ist gewährleistet, dass das Keilspiegelglas in seinen beiden Funktionsstellungen exakt definierte Winkelstellungen einnimmt.

Welche Art von Antriebsmotor in der Antriebseinrichtung eingesetzt wird, ist grundsätzlich beliebig. Besonders einfach und kostengünstig lässt sich die Erfindung bei Verwendung elektrischer Antriebsmotoren umsetzen.

Um die Stellbewegung des Antriebsmotors geeignet auf die Verstelleinrichtung übertragen zu können, ist es besonders vorteilhaft, wenn in der Antriebseinrichtung ein mechanisches Getriebe zur Über- bzw. Untersetzung der Stellbewegung des Antriebsmotors vorhanden ist.

Grundsätzlich ist es ausreichend, wenn die Spannkraft des Spannelements jeweils nur in den beiden Funktionsstellungen des Keilspiegelglases auf die Verstelleinrichtung wirkt. Um die Verstellung der Verstelleinrichtung entlang des Stellwegs zwischen den beiden Funktionsstellungen unterstützen zu können, ist es jedoch besonders vorteilhaft, wenn die Spannkraft des Spannelements entlang des gesamten Stellwegs auf die Verstelleinrichtung wirkt. Das Spannelement muss dabei derart ausgebildet und angeordnet sein, dass die Spannkraft in einem Totpunkt, der zwischen der Normalstellung und der Abblendstellung auf dem Stellweg liegt, die Kraftrichtung ändert. Dadurch wird erreicht, dass dann das Spannelement die Verstelleinrichtung in einem ersten Abschnitt des Stellwegs in Richtung der Normalstellung antreibt, wohingegen in einem zweiten Abschnitt des Stellwegs die Spannkraft in Richtung der Abblendstellung ausgeübt wird.

Wird die Spannkraft des Spannelements entlang des gesamten Stellwegs auf die Verstelleinrichtung ausgeübt, so kann durch Einbau einer Freilaufeinrichtung in den Antriebsstrang der Antriebseinrichtung eine erhebliche Verkürzung der Umschaltzeiten des Keilspiegelglases zwischen der Normalstellung und der Abblendstellung und umgekehrt erreicht werden. Durch diese Freilaufeinrichtung wird die Verstellung der Verstelleinrichtung von der Verstellung der Antriebseinrichtung abhängig vom jeweiligen Bezugspunkt im Stellweg entkoppelt werden. Im Ergebnis ist es damit möglich, dass der Antrieb der Verstelleinrichtung aus der einen Funktionsstellung, beispielsweise der Normalstellung, in die andere Funktionsstellung nur entlang des ersten Abschnitts des Stellwegs bis zum Erreichen des Totpunktes durch Antrieb der Antriebseinrichtung erfolgt. Sobald der Totpunkt überschritten ist, wirkt die Spannkraft der Spannfeder auf die Verstelleinrichtung und bewegt die Verstelleinrichtung so lange weiter, bis die zweite Funktionsstellung, beispielsweise die Abblendstellung, erreicht ist. Aufgrund der Entkoppelung zwischen Antriebseinrichtung und Verstelleinrichtung durch die Freilaufeinrichtung ist gewährleistet, dass die vom Spannelement bewirkte Verstellbewegung nicht behindert wird.

In welcher Art die Freilaufeinrichtung konstruktiv ausgebildet ist, ist grundsätzlich beliebig. Beispielsweise haben sich Klauenkupplungen oder Rutschkupplungen zur Realisation einer solchen Entkopplung zwischen Antriebseinrichtung und Verstelleinrichtung als geeignet erwiesen. Alternativ zur Verwendung von Klauen- oder Rutschkupplungen kann auch eine Antriebsschnecke verwendet werden, die zwischen zwei Anschlagelementen axial verschiebbar auf einer Antriebswelle gelagert ist.

Für die Ansteuerung der Antriebseinrichtung des Innenrückspiegels sind verschiedene Varianten denkbar. Nach einer ersten bevorzugten Variante ist ein lichtempfindlicher Sensor, insbesondere ein Differenzlichtsensor, vorgesehen, der beispielsweise auch selbst im Innenspiegel montiert sein kann. Sobald dieser Lichtsensor ein Aufblenden des nachfolgenden Verkehrs oberhalb einer bestimmten Toleranzschwelle detektiert, wird die Antriebseinrichtung entsprechend angesteuert und das Keilspiegelglas in die Abblendstellung verstellt. Sobald das Licht eine bestimmte Blendschwelle wieder unterschreitet, wird das Keilspiegelglas dann automatisch zurück in die Normalstellung verstellt.

Alternativ bzw. additiv zur Ansteuerung der Antriebseinrichtung mit einem lichtempfindlichen Sensor kann auch ein vom Fahrer betätigbares Schaltelement zur Ansteuerung der Antriebseinrichtung vorgesehen sein. Durch Betätigung dieses Schaltelements, beispielsweise durch Drücken eines Tasters, kann der Fahrer das Keilspiegelglas zwischen der Abblendstellung und der Normalstellung bzw. umgekehrt verstellen.

Nach einer bevorzugten Ausführungsform ist das Schaltelement zur Betätigung der Antriebseinrichtung berührungslos betätigbar. Dadurch sind beispielsweise Ausführungsformen denkbar, bei denen der Fahrer sich mit einer Hand dem Schaltelement, das beispielsweise in den Innenrückspiegel eingebaut sein kann, nur annähert, wobei bei Unterschreiten eines bestimmen Abstands zwischen Hand und Schaltelement eine automatische Umschaltung des Keilspiegelglases zwischen Abblendstellung und Normalstellung bzw. umgekehrt erfolgt.

Weiterhin ist es besonders vorteilhaft, wenn das Schaltelement zur Ansteuerung der Antriebseinrichtung am Lenkrad des Fahrzeugs angeordnet ist. Auf diese Weise wird eine Verstellung des Keilspiegelglases zwischen seinen beiden Funktionsstellungen durch Betätigung des Schaltelements ermöglicht, ohne dass der Fahrer die Hände vom Lenkrad nehmen muss.

In welcher Weise die Abschaltung der Antriebseinrichtung nach Erreichen der Abblendstellung bzw. der Normalstellung erfolgt, ist grundsätzlich beliebig. Beispielsweise können dazu Endschalter oder Wegmesseinrichtungen in den Innenspiegel eingebaut sein, wobei die Antriebseinrichtung bei Auslösen der Endschalter bzw. bei Überschreiten eines bestimmten Stellwegs abgeschaltet wird. Besonders einfach und kostengünstig lässt sich die Abschaltung der Antriebseinrichtung realisieren, wenn in der Antriebseinrichtung ein Zeitschaltglied vorgesehen ist. In diesem Zeitschaltglied ist eine bestimmte Zeit vordefiniert, für die die Antriebseinrichtung nach ihrer Ansteuerung in eine bestimmte Richtung angetrieben wird. Nach Ablauf dieser vorbestimmten Zeit schaltet das Zeitschaltglied die Antriebseinrichtung automatisch ab.

Nachfolgend wird die Erfindung anhand der in den Zeichnungen dargestellten Ausführungsformen beispielhaft erläutert.

### Es zeigen:

- **Fig. 1**: den Aufbau eines Innenrückspiegels mit Keilspiegelglas in perspektivischer Ansicht;
- **Fig. 2**: das Gehäuse und den Tragarm des Innenrückspiegels gemäß **Fig. 1** in perspektivischer Ansicht;
- **Fig. 3**: die Verstelleinrichtung mit daran befestigter Antriebseinrichtung des Innenrückspiegels gemäß **Fig. 1** in perspektivischer Ansicht;
- **Fig. 4**: die Verstelleinrichtung des Innenrückspiegels gemäß **Fig. 1** in perspektivischer Ansicht;
- **Fig. 5**: die Antriebseinrichtung des Innenrückspiegels gemäß **Fig. 1** in perspektivischer Ansicht;
- **Fig. 6**: den Antriebsmotor mit mechanischem Übertragungsgetriebe der Antriebseinrichtung gemäß **Fig. 5** in perspektivischer Ansicht;

- **Fig. 7**: die Freilaufkupplung der Antriebseinrichtung gemäß **Fig. 5** in perspektivischer Ansicht;
- **Fig. 8**: den Antriebsstrang des Innenrückspiegels gemäß **Fig. 1** in der Normalstellung des Keilspiegelglases;
- **Fig. 9**: den Antriebsstrang des Innenrückspiegels gemäß **Fig. 1** in der Abblendstellung des Keilspiegelglases;
- **Fig. 10**: eine zweite Ausführungsform einer Antriebseinrichtung zur Verwendung in einem Innenrückspiegel gemäß **Fig. 1** in perspektivischer Ansicht;
- **Fig. 11**: die Antriebsschnecke der Antriebseinrichtung gemäß **Fig. 10** bei Anordnung des Keilspiegelglases in der Normalstellung;
- **Fig. 12**: die Antriebsschnecke der Antriebseinrichtung gemäß **Fig. 10** bei Anordnung des Keilspiegelglases in der Abblendstellung.

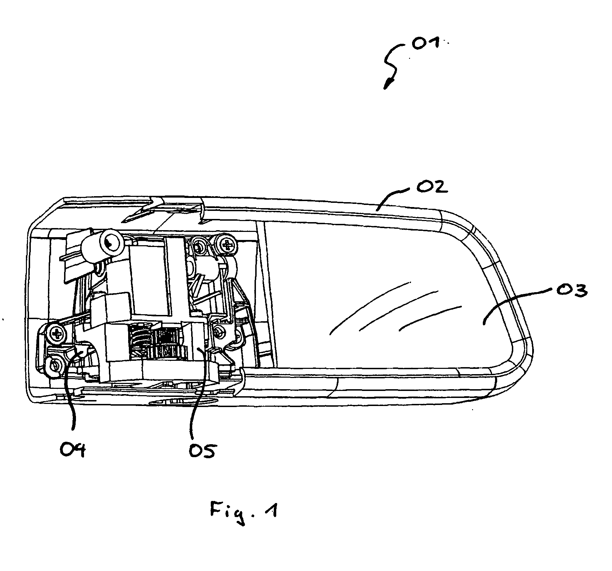

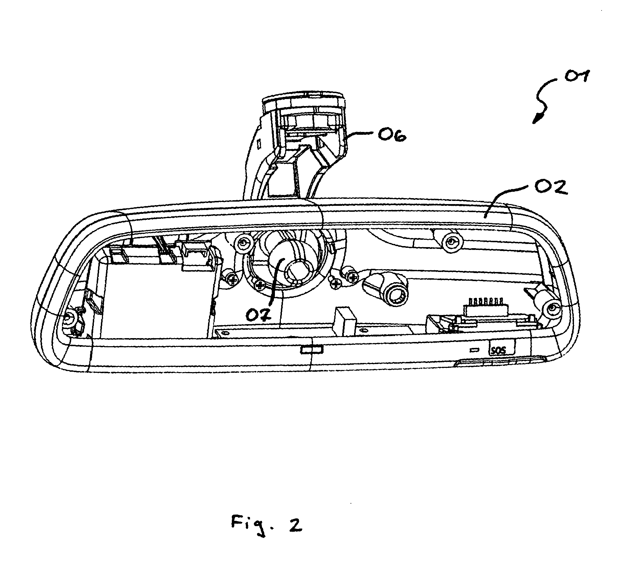

In **Fig. 1** ist ein Innenspiegel 01 mit einem Gehäuse 02 und einem daran befestigten Keilspiegelglas 03 perspektivisch dargestellt. Im Hohlraum zwischen Gehäuse 02 und Keilspiegelglas 03 ist eine Verstelleinrichtung 04 mit einer daran befestigten Antriebseinrichtung 05 untergebracht. In der Verstelleinrichtung 04 ist ein Schwenklager realisiert, so dass durch die Befestigung der Verstelleinrichtung 04 an einem Tragarm 06 (siehe **Fig. 2**) eine Schwenkbewegung des Gehäuses 02 um den Winkel realisiert wird, der durch den Keilwinkel des Keilspiegelglases 03 vorgegeben ist. Im Ergebnis kann also durch Betätigung der Verstelleinrichtung 04 das am Gehäuse 02 starr befestigte Keilspiegelglas 03 um den Winkel relativ zum Tragarm 06 verschwenkt werden, so dass das Keilspiegelglas zwischen der Normalstellung und der Abblendstellung bzw. umgekehrt verstellt wird.

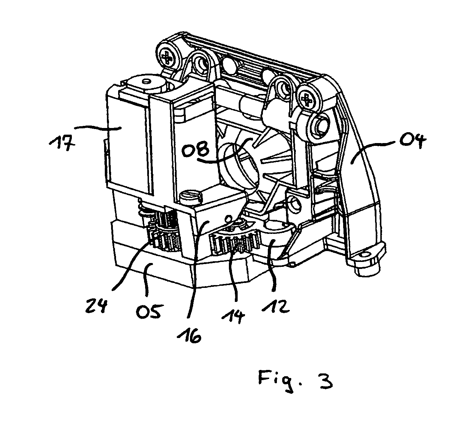

In **Fig. 2** sind das Gehäuse 02 des Innenspiegels 01 und der Tragarm 06, der zur Befestigung des Innenrückspiegels 01 im Fahrzeug dient, dargestellt. An dem zum Gehäuse 02 gerichteten Ende des Tragarms 06 ist ein Kugelkopf 07 vorgesehen, der funktionskomplementär in einer Kugelpfanne 08 (siehe Fig. 3) der Verstelleinrichtung 04 zum Eingriff kommt. Durch Verschwenken der Kugelpfanne 08 relativ zum Kugelkopf 07 kann der Fahrer das Gehäuse 02 mit dem daran starr befestigten Keilspiegelglas 03 individuell auf seine Kopfposition einstellen.

In **Fig**. **3** ist die Verstelleinrichtung 04 mit der daran befestigten Antriebseinrichtung 05 perspektivisch dargestellt.

**Fig**. **4** zeigt die Verstelleinrichtung 04 als Einzelteil in vergrößerter perspektivischer Ansicht. Die Verstelleinrichtung 04 besteht im Wesentlichen aus zwei Teilen 09 und 10, die mittels einer Schwenkachse 11 schwenkbar miteinander verbunden sind. Das erste Teil 09 der Verstelleinrichtung 04 wird mittels geeigneter Befestigungsmittel, beispielsweise Schrauben, starr mit dem Gehäuse 02 verbunden. Das zweite Teil 10 der Verstelleinrichtung 04 wird mittels der Kugelpfanne 08 auf dem Kugelkopf 07 des Tragarms 06 befestigt. Im Ergebnis kann so durch Verschwenken des ersten Teils 09 der Verstelleinrichtung 04 relativ zum zweiten Teil 10 der Verstelleinrichtung 04 die zur Verstellung des Keilspiegelglases 03 erforderliche Schwenkbewegung entsprechend dem Keilwinkel des Keilspiegelglases 03 realisiert werden. Am ersten Teil 09 sind zwei Vorsprünge angeformt, die gemeinsam als erster Endanschlag 35 bei der Verstellung des zweiten Teils 10 dienen. Auf der gegenüberliegenden Seite des zweiten Teils 10 sind zwei weitere Vorsprünge an das erste Teil 09 angeformt (in **Fig**. **4** teilweise verdeckt), die gemeinsam als zweiter Endanschlag 36 bei der Verstellung des zweiten Teils 10 dienen.

Der Antrieb des zweiten Teils 10 relativ zum ersten Teil 09 der Verstelleinrichtung 04 wird durch eine Kurvenscheibe 12 realisiert. Der zweite Teil 10 der Verstelleinrichtung 04 steht mittels eines Führungsbolzens 13 mit der Kurvenscheibe 12 in Eingriff. Je nach Stellwinkel der Kurvenscheibe 12 wird der Führungsbolzen 13 nach vorne bzw. hinten verschoben und der zweite Teil 10 der Verstelleinrichtung 04 entsprechend relativ zum ersten Teil 09 verschwenkt. Zum Antrieb der Kurvenscheibe 12 mittels der Antriebseinrichtung 05 ist an der Vorderseite der Kurvenscheibe 12 eine Stirnradverzahnung 14 vorgesehen. Um den Innenspiegel 01 bei Verwendung der Verstelleinrichtung 04 wahlweise auch ohne Antriebseinrichtung 05 realisieren zu können, beispielsweise wenn die Antriebseinrichtung 05 lediglich als Sonderausstattungsmerkmal eingebaut werden soll, ist an der unteren Seite der Kurvenscheibe 12 ein Koppelelement 15 vorgesehen, an dem dann wahlweise ein manuell zu betätigendes Verstellelement, beispielsweise ein Drehknopf, befestigt wird. Damit ist eine manuelle Verstellmöglichkeit gegeben.

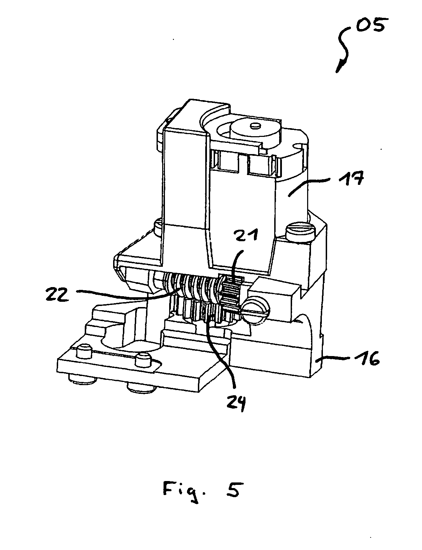

In **Fig. 5** ist die Antriebseinrichtung 05 als Einzelteil dargestellt. Die Antriebseinrichtung 05 ist insgesamt auf einem Trägerelement 16 montiert und kann als Sonderausstattungsmerkmal des Innenspiegels 01 einfach dadurch realisiert werden, dass das Trägerelement 16 als vormontiertes Bauteil an der Verstelleinrichtung 04 befestigt wird. Die zur Verstellung der Verstelleinrichtung 04 erforderliche Stellbewegung wird von einem elektrischen Antriebsmotor 17 erzeugt. Diese Antriebsbewegung wird mittels eines Antriebsstrangs, der in der Art eines mechanischen Übersetzungsgetriebes ausgebildet ist, auf die Stirnradverzahnung 14 der Kurvenscheibe 12 übertragen.

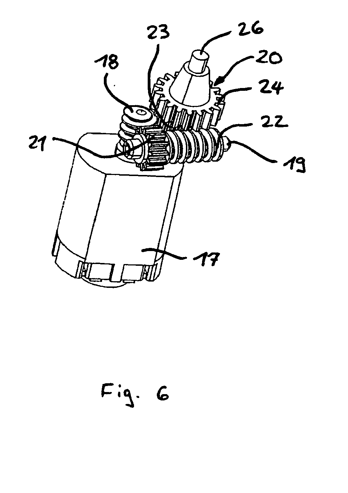

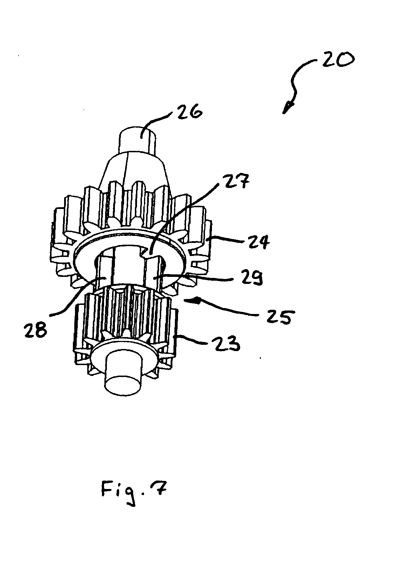

Aus **Fig. 6** ist der Aufbau des Antriebsstrangs mit Antriebsmotor 17, Abtriebsschnecke 18 zwischen Welle 19 und Freilaufeinrichtung 20 ersichtlich. Die Abtriebsschnecke 18 treibt bei Ansteuerung des Antriebsmotors 17 ein an der Zwischenwelle 19 angeformtes Schneckenrad 21 an. Das Schneckenrad 21 der Zwischenwelle 19 ist starr mit der Antriebsschnecke 22 verbunden, die ihrerseits ein Schneckenrad 23 (in **Fig. 6** verdeckt gezeichnet) antreibt. Das Schneckenrad 23 bildet zusammen mit einem Stirnrad 24 eine Freilaufeinrichtung, wobei dazu das Stirnrad 24 und das Schneckenrad 23 mittels einer Klauenkupplung 25 (siehe **Fig. 7**) in Eingriff stehen.

Aus **Fig. 7** ist die Funktion der Freilaufeinrichtung 20 schematisch ersichtlich, wobei dazu in **Fig. 7** die Freilaufeinrichtung 20 in geöffneter Stellung dargestellt ist. Das Schneckenrad 23 ist starr mit einer Welle 26 verbunden, auf der das Stirnrad 24 drehbar gelagert ist. Auf der Innenseite des Stirnrads 24 ist eine Klaue 27 angeformt, die mit zwei Klauen 28 und 29, die an der Welle 26 angeformt sind, in Eingriff kommt. Bei Antrieb des Schneckenrads 23 im Gegenuhrzeigersinn kommt die Klaue 27 an der Klaue 29 zur Anlage, so dass das Stirnrad 24 vom Schneckenrad 23 mitgenommen wird. Bei Antrieb des Schneckenrads 23 im Uhrzeigersinn kommt dagegen die Klaue 27 an der Klaue 28 zur Anlage, so dass das Stirnrad 24 in die Gegenrichtung mitgenommen wird. Durch den Stellweg der Klaue 27 zwischen den beiden Klauen 28 und 29 wird ein Freilauf entlang eines bestimmten Stellwinkels zwischen Schneckenrad 23 und Stirnrad 24 realisiert.

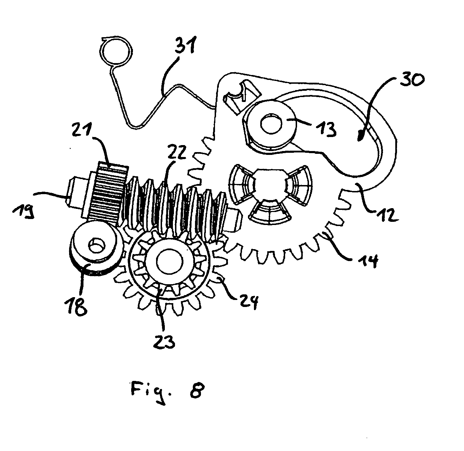

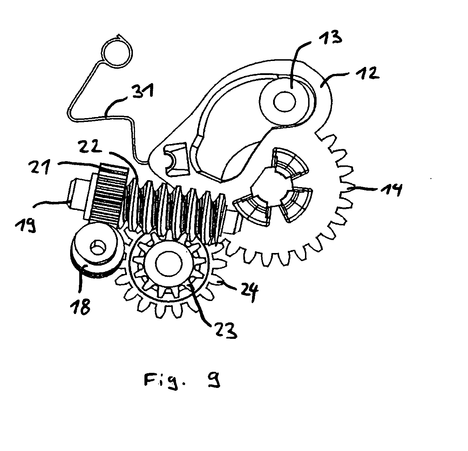

Aus **Fig. 8** und **Fig. 9** ist die Funktion des Antriebsstrangs zur Verstellung des Keilspiegelglases im Innenspiegel 01 ersichtlich. **Fig. 8** zeigt den Antriebsstrang bei Anordnung des Keilspiegelglases 03 in der Normalstellung, wohingegen in **Fig. 9** der Antriebsstrang bei Anordnung des Keilspiegelglases 03 in der Abblendstellung dargestellt ist. Der am zweiten Teil 10 der Verstelleinrichtung 04 überstehende Führungsbolzen 13 ist in der Führungsnut 30 geführt.

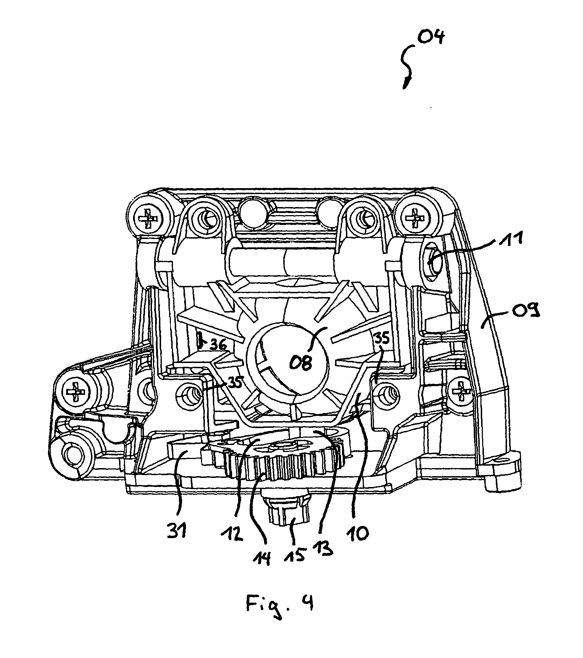

Neben der Antriebseinrichtung 05 steht auch noch eine Schenkelfeder mit der Kurvenscheibe 12 im Eingriff. Das eine Ende der Schenkelfeder 31 ist drehbar in der Verstelleinrichtung 04 gelagert (siehe Fig. 4). Durch die Schenkelfeder 31 wird die Kurvenscheibe 12 in den beiden Endstellungen des Führungsbolzens 13 in der Führungsnut 30 elastisch vorgespannt.

Bei Verstellung des Keilspiegelglases 03 aus der Normalstellung in die Abblendstellung bzw. umgekehrt aus der Abblendstellung in die Normalstellung wird wie folgt vorgegangen. Zunächst wird ausgelöst durch ein entsprechend geeignetes Betätigungselement, beispielsweise einen Schalter am Lenkrad oder einen lichtempfindlichen Sensor, der Antriebsmotor 17 angesteuert und dadurch die Abtriebsschnecke 18 in Rotation versetzt. Dadurch wird die Zwischenwelle 19 ebenfalls in Rotation versetzt und die Antriebsbewegung über die Freilaufeinrichtung 20 auf das Stirnrad 14 der Kurvenscheibe 12 übertragen. Entsprechend dem Stellwinkel der Kurvenscheibe 12 wird der Führungsbolzen 13 nach vorne bzw. nach hinten verschoben und der zweite Teil 10 der Verstelleinrichtung 04 somit relativ zum ersten Teil 09 verschwenkt. Die von der Schenkelfeder 31 aufgebrachte Federkraft steigt bei der Verstellung der Kurvenscheibe 12 kontinuierlich an, bis ein Totpunkt erreicht ist, bei dem die Kraftrichtung der Schenkelfeder 31 aufgrund ihrer speziellen Gestaltung einen Umkehrpunkt hat.

Sobald dieser Umkehrpunkt erreicht ist, wirkt die Spannkraft der Schenkelfeder 31 in Gegenrichtung und drückt die Kurvenscheibe 12 in Richtung des jeweils gegenüberliegenden Endanschlags 35 oder 36. Die von der Schenkelfeder 31 aufgebrachte Spannkraft bewirkt eine unmittelbare Schwenkbewegung der Verstelleinrichtung 14 in Richtung des Endanschlags 35 oder 36, wobei die Verstelleinrichtung 14 durch die Freilaufeinrichtung 20 in diesem Stellwegbereich von der Antriebseinrichtung 05 entkoppelt ist und somit die Schwenkbewegung im zweiten Abschnitt des Stellweges nicht behindert. Sobald der Teil 10 den Endanschlag 35 oder 36 (siehe **Fig. 4**) erreicht hat, wird die schwenkbare Lagerung des Gehäuses 02 von der Schenkelfeder 31 elastisch vorgespannt.

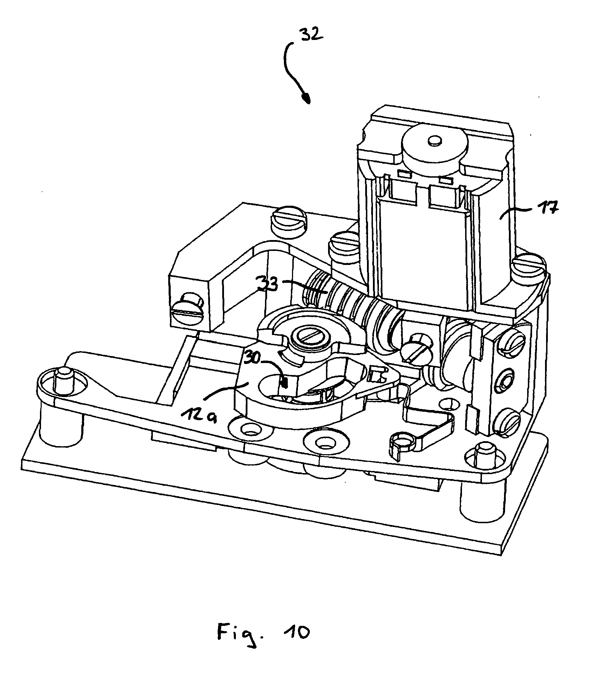

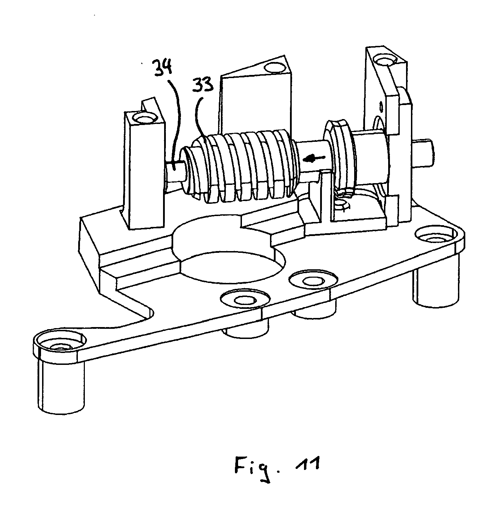

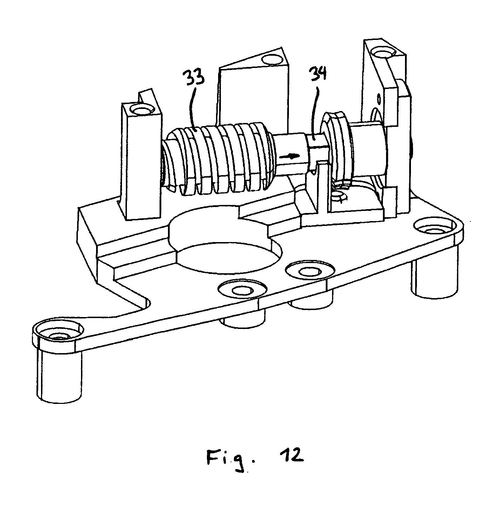

In **Fig. 10** bis **Fig. 12** ist eine zweite Ausführungsform 32 einer für den Innenspiegel 01 grundsätzlich geeigneten Antriebseinrichtung dargestellt. Bei der Antriebseinrichtung 32 wird die Stellbewegung mittels einer Antriebsschnecke 33 auf die Kurvenscheibe 12a übertragen, die dazu auf ihrer einen Seite in der Art eines Schneckenrads ausgebildet ist. Die Antriebsschnecke 33 ist ihrerseits axial verschiebbar auf einer Antriebswelle 34 gelagert, die vom Antriebsmotor 17 rotatorisch angetrieben werden kann. Wie aus **Fig. 11** und **Fig. 12** ersichtlich, kann die Antriebsschnecke 33 zwischen zwei Endanschlägen auf der Antriebswelle 34 axial verschoben werden. Durch diese axiale Verschiebbarkeit der Antriebsschnecke 33 wird der Freilauf im Antriebsstrang zum Antrieb der Kurvenscheibe 12a realisiert. Sobald bei Antrieb der Kurvenscheibe 12a der Totpunkt der Schenkelfeder 31 überschritten ist, wird die Kurvenscheibe 12a angetrieben von der Federkraft der Schenkelfeder 31 in Richtung des gegenüberliegenden Endanschlags gedrückt und dabei die Antriebsschnecke 33 von dem jeweils anliegenden Endanschlag in Richtung des gegenüberliegenden Endanschlags verschoben.

## Patentansprüche

1. Innenspiegel (01) für ein Fahrzeug mit einem Tragarm (06), der im Fahrzeug befestigbar ist, und mit einer Verstelleinrichtung (04), die am Tragarm (06) einstellbar gelagert ist, wobei an der Verstelleinrichtung (04) ein Keilspiegelglas (03) mittelbar oder unmittelbar befestigt ist, und wobei das Keilspiegelglas (03) durch Betätigung der Verstelleinrichtung (04) zwischen einer Normalstellung und einer Abblendstellung verstellbar ist, wobei zur Betätigung der Verstelleinrichtung (04) eine Antriebseinrichtung (05) vorgesehen ist, die ein mechanisches Getriebe (18, 19, 20, 21, 22, 23, 24) aufweist, und wobei im Innenspiegel (01) zumindest ein elastisches Spannelement (31) vorgesehen ist, mit dem die Verstelleinrichtung (04) in der Normalstellung und/oder der Abblendstellung elastisch verspannt wird,
**dadurch gekennzeichnet,**
**dass** die Antriebseinrichtung (05) auf einem Trägerelement (16) montiert ist, das unter Ankoppelung am Getriebe (18, 19, 20, 21, 22, 23, 24) der Antriebseinrichtung (05) als separates Sonderausstattungselement an die Verstelleinrichtung (04) montierbar ist.

2. Innenspiegel nach Anspruch 1,
**dadurch gekennzeichnet,**
**dass** das Spannelement (31) von einem Federelement gebildet wird.

3. Innenspiegel nach Anspruch 2,
**dadurch gekennzeichnet,**
**dass** das Federelement in der Art einer Schenkelfeder (31) oder Spreizfeder ausgebildet ist.

4. Innenspiegel nach einem der Ansprüche 1 bis 3,
**dadurch gekennzeichnet,**
**dass** die Normalstellung durch einen ersten Endanschlag (35) definiert ist und/oder die Abblendstellung durch einen zweiten Endanschlag (36) definiert ist, wobei das Spannelement (31) die Verstelleinrichtung (04) gegen den ersten Endanschlag (35) und/oder den zweiten Endanschlag (36) verspannt.

5. Innenspiegel nach einem der Ansprüche 1 bis 4,
**dadurch gekennzeichnet,**
**dass** die Antriebseinrichtung (05) einen elektrischen Antriebsmotor (17) aufweist.

6. Innenspiegel nach einem der Ansprüche 1 bis 5,
**dadurch gekennzeichnet,**
**dass** das Spannelement (31) entlang des gesamten Stellweges der Verstelleinrichtung (04) zwischen Normalstellung und Abblendstellung eine Spannkraft auf die Verstelleinrichtung (04) ausübt, wobei die Spannkraft des Spannelements (31) in einem Totpunkt, der zwischen der Normalstellung und der Abblendstellung auf dem Stellweg liegt, die Kraftrichtung ändert.

7. Innenspiegel nach Anspruch 6,
**dadurch gekennzeichnet,**
**dass** im Getriebe (18, 19, 20, 21, 22, 23, 24) der Antriebseinrichtung (05) eine Freilaufeinrichtung (20) vorgesehen ist, die nach Überschreiten des Totpunktes den Antrieb der Verstelleinrichtung (04) durch die Spannkraft der Spanneinrichtung (31) unabhängig von der Verstellung der Antriebseinrichtung (05) ermöglicht.

8. Innenspiegel nach Anspruch 7,
**dadurch gekennzeichnet,**
**dass** die Freilaufeinrichtung (20) in der Art einer Klauenkupplung ausgebildet ist.

9. Innenspiegel nach Anspruch 7,
**dadurch gekennzeichnet,**
**dass** die Freilaufeinrichtung in der Art einer Rutschkupplung ausgebildet ist.

10. Innenspiegel nach Anspruch 7,
**dadurch gekennzeichnet,**
**dass** die Freilaufeinrichtung von einer Antriebsschnecke (33) gebildet wird, die zwischen zwei Anschlagelementen axial verschiebbar auf einer Antriebswelle (34) gelagert ist.

11. Innenspiegel nach einem der Ansprüche 1 bis 10,
**dadurch gekennzeichnet,**
**dass** die Antriebseinrichtung (05) von einem lichtempfindlichen Sensor, insbesondere einem Differenzlichtsensor, angesteuert wird.

12. Innenspiegel nach einem der Ansprüche 1 bis 11,
**dadurch gekennzeichnet,**
**dass** die Antriebseinrichtung (05) von einem durch den Fahrer betätigbaren Schaltelement angesteuert wird.

13. Innenspiegel nach einem der Ansprüche 1 bis 12,
**dadurch gekennzeichnet,**
**dass** das Schaltelement berührungslos betätigbar ist.

14. Innenspiegel nach einem der Ansprüche 1 bis 13,
**dadurch gekennzeichnet,**
**dass** das Schaltelement am Innenspiegel angeordnet ist.

15. Innenspiegel nach einem der Ansprüche 1 bis 13,
**dadurch gekennzeichnet,**
**dass** das Schaltelement am Lenkrad des Fahrzeugs angeordnet ist.

16. Innenspiegel nach einem der Ansprüche 1 bis 15,
**dadurch gekennzeichnet,**
**dass** in der Antriebseinrichtung (05) ein Zeitschaltglied vorgesehen ist, wobei das Zeitschaltglied die Antriebseinrichtung (05) eine bestimmte Zeit nach Ansteuerung der Antriebseinrichtung abschaltet.

## Claims

1. An interior mirror (01) for a vehicle with a carrying arm (06) which can be mounted in the vehicle and with an adjustment mechanism (04) which is adjustably mounted on the carrying arm (06), whereby a wedge mirror glass (03) is directly or indirectly mounted on the adjustment mechanism (04) and whereby the wedge mirror glass (03) is adjustable between a normal position and an anti-glare position by operation of the adjustment mechanism (04), whereby a drive mechanism (05) having a mechanical gear (18, 19, 20, 21, 22, 23, 24) is provided for operation of the adjustment mechanism (04), and whereby in the interior mirror (01) at least one elastic tension element (31) is provided with which the adjustment mechanism (04) is under elastic tension in the normal position and/or in the anti-glare position,
**characterized in that**
the drive mechanism (05) is mounted on a carrier element (16) which can be mounted on the adjustment mechanism (04) as a separate special equipment element with coupling to the gear (18, 19, 20, 21, 22, 23, 24) of the adjustment mechanism (05).

2. The interior mirror according to Claim 1,
**characterized in that**
the tension element (31) is formed by a spring element.

3. The interior mirror according to Claim 2,
**characterized in that**
the spring element is designed in the manner of a torsion spring (31) or a bracing spring.

4. The interior mirror according to one of Claims 1 through 3,
**characterized in that**
the normal position is defined by a first end stop (35) and/or the anti-glare position is defined by a second end stop (36) whereby the tension element (31) puts the adjustment mechanism (04) under tension against the first end stop (35) and/or the second end stop (36).

5. The interior mirror according to one of Claims 1 through 4,
**characterized in that**
the drive mechanism (05) has an electric drive motor (17).

6. The interior mirror according to one of Claims 1 through 5,
**characterized in that**
the tension element (31) exerts a tension force on the adjustment mechanism (04) along the entire actuator travel path of the adjustment mechanism (04) between the normal position and the anti-glare position, whereby the tension force of the tension element (31) changes the direction of force at a dead centre which is located along the actuator travel path between the normal position and the anti-glare position.

7. The interior mirror according to Claim 6,
**characterized in that**
a free-wheeling device (20) is provided in the gear (18, 19, 20, 21, 22, 23, 24) of the drive mechanism (05), making it possible for the adjustment mechanism (04) to be driven by the tension force of the tension device (31) after passing the dead centre, independently of the adjustment of the drive mechanism (05).

8. The interior mirror according to Claim 7,
**characterized in that**
the free-wheeling device (20) is designed in the manner of a claw clutch.

9. The interior mirror according to Claim 7,
**characterized in that**
the free-wheeling device is designed in the manner of a slip clutch.

10. The interior mirror according to Claim 7,
**characterized in that**
the free-wheeling device is formed by a drive screw (33) which is mounted on a drive shaft (34) so that it is axially displaceable between two stop elements.

11. The interior mirror according to one of Claims 1 through 10,
**characterized in that**
the drive mechanism (05) is driven by a light-sensitive sensor, in particular a differential light sensor.

12. The interior mirror according to one of Claims 1 through 11,
**characterized in that**
the drive mechanism (05) is triggered by a switch element which can be operated by the driver.

13. The interior mirror according to one of Claims 1 through 12,
**characterized in that**
the switch element can be operated by a non-contact method.

14. The interior mirror according to one of Claims 1 through 13,
**characterized in that**
the switch element is arranged on the interior mirror.

15. The interior mirror according to one of Claims 1 through 13,
**characterized in that**
the switch element is arranged on the steering wheel of the vehicle.

16. The interior mirror according to one of Claims 1 through 15,
**characterized in that**
a timing element is provided in the drive mechanism (05) whereby the timing element shuts down the drive mechanism (05) a certain period of time after triggering of the drive mechanism.

## Revendications

1. Rétroviseur intérieur (01) pour un véhicule comprenant un bras support (06), qui peut être fixé dans le véhicule, et un dispositif d'ajustage (04), qui est logé de façon ajustable sur le bras support (06), un verre de miroir à coin (03) étant fixé indirectement ou directement sur le dispositif d'ajustage (04), et le verre de miroir à coin (03) pouvant être réglé par l'actionnement du dispositif d'ajustage (04) entre une position normale et une position anti-éblouissement, un dispositif d'entraînement (05), qui présente une transmission (18, 19, 20, 21, 22, 23, 24) mécanique, étant prévu pour l'actionnement du dispositif d'ajustage (04), et au moins un élément de serrage (31) élastique étant prévu dans le miroir intérieur (01), avec lequel le dispositif d'ajustage (04) est tendu de façon élastique dans la position normale et/ou la position anti-éblouissement,
**caractérisé en ce que**
le dispositif d'entraînement (05) est monté sur un élément support (16), qui peut être monté sous forme d'élément d'équipement spécial séparé sur le dispositif d'ajustage (04) par accouplement sur la transmission (18, 19, 20, 21, 22, 23, 24) du dispositif d'entraînement (05).

2. Miroir intérieur selon la revendication 1,
**caractérisé en ce que**
l'élément de serrage (31) est formé par un élément de ressort.

3. Miroir intérieur selon la revendication 2,
**caractérisé en ce que**
l'élément de ressort est conçu sous la forme d'un ressort spiralé (31) ou d'un ressort écarteur.

4. Miroir intérieur selon l'une quelconque des revendications 1 à 3,
**caractérisé en ce que**
la position normale est définie par une première butée finale (35) et/ou la position anti-éblouissement est définie par une seconde butée finale (36), l'élément de serrage (31) tendant le dispositif d'ajustage (04) contre la première butée finale (35) et/ou la seconde butée finale (36).

5. Miroir intérieur selon l'une quelconque des revendications 1 à 4,
**caractérisé en ce que**
le dispositif d'entraînement (05) présente un moteur d'entraînement (17) électrique.

6. Miroir intérieur selon l'une quelconque des revendications 1 à 5,
**caractérisé en ce que**
l'élément de serrage (31) exerce une force de serrage sur le dispositif d'ajustage (04) le long de l'ensemble de la course de réglage du dispositif d'ajustage (04) entre la position normale et la position anti-éblouissement, la force de serrage de l'élément de serrage (31) modifiant la direction de la force en un point mort qui se situe entre la position normale et la position anti-éblouissement sur la course de réglage.

7. Miroir intérieur selon la revendication 6,
**caractérisé en ce que**
dans la transmission (18, 19, 20, 21, 22, 23, 24) du dispositif d'entraînement (05) est prévu un dispositif de course libre (20), qui, après le dépassement du point mort, permet l'entraînement du dispositif d'ajustage (04) par la force de serrage du dispositif de serrage (31) indépendamment du réglage du dispositif d'entraînement (05).

8. Miroir intérieur selon la revendication 7,
**caractérisé en ce que**
le dispositif de course libre (20) est conçu sous la forme d'un accouplement à griffes.

9. Miroir intérieur selon la revendication 7,
**caractérisé en ce que**
le dispositif de course libre est conçu sous la forme d'un accouplement à glissement.

10. Miroir intérieur selon la revendication 7,
**caractérisé en ce que**
le dispositif de course libre est formé par une vis sans fin d'entraînement (33), qui est fixée sur un arbre d'entraînement (34) de façon à pouvoir coulisser axialement entre deux éléments de butée.

11. Miroir intérieur selon l'une quelconque des revendications 1 à 10,
**caractérisé en ce que**
le dispositif d'entraînement (05) est actionné par un capteur sensible à la lumière, en particulier un capteur de lumière différentielle.

12. Miroir intérieur selon l'une quelconque des revendications 1 à 11,
**caractérisé en ce que**
le dispositif d'entraînement (05) est actionné par un élément de commande pouvant être actionné par le conducteur.

13. Miroir intérieur selon l'une quelconque des revendications 1 à 12,
**caractérisé en ce que**
l'élément de commande peut être actionné sans contact.

14. Miroir intérieur selon l'une quelconque des revendications 1 à 13,
**caractérisé en ce que**
l'élément de commande est disposé sur le miroir intérieur.

15. Miroir intérieur selon l'une quelconque des revendications 1 à 13,
**caractérisé en ce que**
l'élément de commande est disposé sur le volant du véhicule.

16. Miroir intérieur selon l'une quelconque des revendications 1 à 15,
**caractérisé en ce que**
un élément temporisateur est prévu dans le dispositif d'entraînement (05), l'élément temporisateur déconnectant le dispositif d'entraînement (05) un certain temps après l'actionnement du dispositif d'entraînement.
